Europäisches Patentamt

European Patent Office

Office européen des brevets

(11) Veröffentlichungsnummer: **0 061 754**
**A1**

(12) **EUROPÄISCHE PATENTANMELDUNG**

(21) Anmeldenummer: **82102607.7**

(22) Anmeldetag: **27.03.82**

(51) Int. Cl.³: **B 43 L 13/02**
**G 06 K 15/22**

(30) Priorität: **30.03.81 DE 3112552**

(43) Veröffentlichungstag der Anmeldung:
**06.10.82 Patentblatt 82/40**

(84) Benannte Vertragsstaaten:
**AT BE CH DE FR GB IT LI LU NL SE**

(71) Anmelder: **BZ Plankenhorn KG**
**Mühlgasse 22**
**D-7208 Spaichingen(DE)**

(72) Erfinder: **Däuble, Herbert**
**Hauptstrasse 132**
**D-7208 Spaichingen(DE)**

(74) Vertreter: **Hoeger, Stellrecht & Partner**
**Uhlandstrasse 14c**
**D-7000 Stuttgart 1(DE)**

(54) **Rechnergesteuertes Zeichengerät.**

(57) Die Erfindung betrifft ein rechnergesteuertes Zeichengerät mit X-Y-Zeicheneinrichtungen, welches als Laufwagen-Zeichenmaschine (10) ausgebildet ist, bei der mit dem Zeichenkopfträger (24) direkt ein Schreib/Lesestift-Träger (26) verbunden ist, dessen X-Y-Koordinaten durch Positionserfassungseinrichtungen erfasst werden können, wobei Speichereinrichtungen (12) vorgesehen sind, um die Positionsdaten zu speichern, wobei ferner Steuereinrichtungen (12, 14) vorgesehen sind, durch die Bewegungen des Schreib/Lesestift-Trägers gegenüber dem Zeichenbrett (30) in digitaler Form aufzeichenbar sind und durch die der Schreib/Lesestift-Träger andererseits in Abhängigkeit von gespeicherten und/oder in eine Tastatur eingegebenen Koordinatendaten zur Relativbewegungen gegenüber dem Zeichenbrett freigebbar ist.

Fig. 1

EP 0 061 754 A1

Croydon Printing Company Ltd.

HOEGER, STELLRECHT & PARTNER

PATENTANWÄLTE

UHLANDSTRASSE 14 c · D 7000 STUTTGART 1

0061754

A 44 420 m
k - 176
27. März 1981

Anmelder: BZ Plankenhorn KG
Mühlgasse 22
7208 Spaichingen

Rechnergesteuertes Zeichengerät

Die Erfindung betrifft ein rechnergesteuertes Zeichengerät mit X-Y-Zeicheneinrichtungen.

Derartige rechnergesteuerte Zeichengeräte sind in Form
von sogenannten Plottern bekannt, wie sie beispielsweise in der Zeitschrift "Zeichnen", 18. Jg., 1980, Heft 4,
Seiten 150 - 153 beschrieben sind. Im einzelnen handelt
es sich dabei um elektronisch gesteuerte, auflegbare
Zeichenplotter, die insbesondere dazu bestimmt sind, zuvor beispielsweise auf einer Zeichenmaschine hergestellte
Zeichnungen zu beschriften, gegebenenfalls zu vermaßen
und durch das Einzeichnen von Normteilen, Wiederholteilen usw., für die spezielle Programme gespeichert sind,
zu ergänzen.

Nachteilig an derartigen Plottern ist es, daß sie nur
eine relativ begrenzte Zeichenfläche (derzeitiges Format etwa DIN A3) aufweisen und daß ihre bei der Bearbeitung eines größeren Zeichnungsformats mehrfach erforderliche Positionierung in einer definierten Lage bezüglich
der vorbereiteten Zeichnung relativ zeitraubend und
schwierig ist und eine erhebliche Gefahr von Fehlern
mit sich bringt. Nachteilig ist es zudem, daß entweder
der Plotter zum Zeichenplatz, insbesondere zu einer Zeichenmaschine transportiert werden muß, wenn die vorbereitenden Arbeiten abgeschlossen sind, oder daß die vorbereitete Zeichnung zum Arbeitsplatz für den Plotter transportiert und dort wieder fixiert werden muß.

Es sind auch bereits digital anzeigende Zeichenmaschinen bekannt, bei denen über die Laufwagen eine digitale Koordinatenanzeige und außerdem am Zeichenkopf eine digitale Winkelanzeige erhalten wird. Die digitale X- und Y-Koordinatenanzeige erfolgt dabei bezogen auf die Drehachse des Zeichenkopfes unter Berücksichtigung des Nullpunkts der Zeichenlineale. Der Vorteil solcher digital anzeigender Zeichenmaschinen besteht dabei darin, daß bei Eingabe entsprechender Steuerbefehle an einer hierfür vorgesehenen Tastatur auch die Anzeige der Abstände von Punkten voneinander und von einem gemeinsamen Nullpunkt ermöglicht wird, wobei durch Umschaltung auf Polarkoordinaten neben den X- und Y-Abständen auch die Winkel und Radien bestimmt bzw. angezeigt werden können. Diese Möglichkeiten erleichtern insbesondere in Verbindung mit der Möglichkeit, auch bestimmte Zeichnungsmaßstäbe auszuwählen, die Arbeit des Konstrukteurs hinsichtlich der Genauigkeit, mit der die Zeichnungen erstellt werden können und hinsichtlich der Vermeidung von Rechenfehlern. Andererseits ändert sich an der Zeichentätigkeit des Konstrukteurs beim Arbeiten mit einer digital anzeigenden Zeichenmaschine insofern nichts Wesentliches, als die einzelnen Linien der Zeichnung an den Zeichenlinealen in üblicher Weise unter Fixierung des Zeichenkopfes gezeichnet werden müssen und da die Anzeige der Zeichenmaschine für zahlreiche Zeichenarbeiten,wie das Einzeichnen von Kreisen oder das
Einzeichnen von gekrümmten Linien mit Hilfe von Kurvenlinealen, nur wenig zusätzliche Hilfe bietet.

Ausgehend vom Stande der Technik und der vorstehend aufgezeigten Problematik liegt der Erfindung die Aufgabe
zugrunde, ein verbessertes, rechnergesteuertes Zeichengerät anzugeben, welches auf der Basis einer konventionellen Laufwagen-Zeichenmaschine eine direkte Speicherung
der digitalisierten Daten einer mit Hilfe der Zeichenmaschine erstellten oder auf dieser abgetasteten Zeichnung ermöglicht.

Diese Aufgabe wird bei einem rechnergesteuerten Zeichengerät der eingangs beschriebenen Art gemäß der Erfindung
dadurch gelöst, daß es eine Laufwagen-Zeichenmaschine
mit einem mit dem Zeichenkopfträger derselben direkt
verbundenen Schreib/Lesestift-Träger aufweist, daß Positionserfassungeinrichtungen für das Erfassen der jeweiligen X-Y-Koordinaten des Zeichenkopfträgers gegenüber
der Zeichenfläche vorgesehen sind, daß Speichereinrichtungen vorgesehen sind, die mit den Positionserfassungseinrichtungen verbunden sind, und daß Steuereinrichtungen
vorgesehen sind, durch die von Hand herbeigeführte Bewegungen des Schreib/Lesestift-Trägers gegenüber der Zeichenfläche in Form der durchlaufenen X-Y-Koordinaten
digital aufzeichenbar sind und durch die der Schreib/
Lesestift-Träger in Abhängigkeit von gespeicherten und/
oder über eine Tastatur eingegebenen digitalen X-Y-
Koordinatendaten zu Relativbewegungen gegenüber der
Zeichenfläche freigebbar ist.

Der entscheidende Vorteil des rechnergesteuerten Zeichengeräts gemäß der Erfindung besteht dabei darin, daß beim Erstellen einer neuen Zeichnung in jedem Augenblick die exakte Position des Schreib- bzw. Zeichenstiftes selbst exakt erfasst und in digitaler Form gespeichert werden kann, während bei den eingangs erwähnten digital anzeigenden Zeichenmaschinen im Grunde genommen lediglich die Lage der Zeichen-Hilfseinrichtungen (Lineale und drehbarer Zeichenkopf) angezeigt werden kann, ohne daß die Bewegung dieser Zeichenhilfseinrichtungen für eine spätere Rekonstruktion der Zeichnung gespeichert würde. Auf diese Weise wird die Möglichkeit eröffnet, direkt beim Zeichnen durch Eintasten entsprechender Markierungssignale die Stellen zu markieren, an denen die Zeichnung später durch Beschriftungssymbole, spezielle Kurven oder bestimmte Zeichnungselemente ergänzt werden muß, deren Daten gespeichert sind. Der Verlust der Zeichenhilfseinrichtungen, insbesondere der Lineale, bringt dabei keine Probleme beim genauen Erstellen der Zeichnungen mit sich, da in Abhängigkeit von den gespeicherten bzw. eingetasteten Daten eine Art elektronischer Kulissenführung für den Zeichenstift erreichbar ist, die den Verzicht auf Zeichen-Hilfseinrichtungen ermöglicht.

Eine derartige elektronische Kulissenführung wird in vorteilhafter Ausgestaltung der Erfindung dadurch erreicht, daß der bei einer konventionellen Zeichenmaschine vorgesehene Gewichtsausgleich durch zugeordnete Antriebseinrichtungen, wie Schrittschaltmotoren und dergleichen, in Abhängigkeit von den gespeicherten bzw. eingetasteten Daten automatisch derart betätigt wird, daß sich für den Schreib/Lesestift-Träger eine definierte
Kurvenbahn bzw. Linie ergibt, längs welcher dieser bewegt werden kann und die bei aktivierten Steuereinrichtungen nur mit Gewalt verlassen werden könnte.

Andererseits besteht bei einem Zeichengerät gemäß der
Erfindung durchaus auch die Möglichkeit für ein freies
Zeichnen wie auf einer konventionellen Zeichenmaschine,
und zwar dann, wenn man die Steuereinrichtungen derart
einstellt, daß die Antriebsmotoren als Servomotoren arbeiten und eine vom Zeichner eingeleitete Bewegung des
Zeichenkopfträgers unterstützen, wobei in Ausgestaltung
der Erfindung auch die Möglichkeit besteht, den Schreib/
Lesestift-Träger derart lösbar am Zeichenkopfträger zu
befestigen, daß er für die Herstellung von Zeichnungen
in konventioneller Weise durch die übliche Zeichenkopf-
Lineal-Anordnung ersetzt werden kann.

Ein besonderer Vorteil des erfindungsgemäßen Zeichengeräts besteht in Ausgestaltung der Erfindung ferner darin, daß durch die beim Erstellen der Zeichnung abgespeicherten Koordinatendaten einschließlich der eingetasteten Daten über die an bestimmten Koordinaten zu
zeichnenden Symbole, Teilkonstruktionen usw. eine hervorragende Vorbereitung auf einen nachfolgenden Einsatz
eines Plotters gegeben ist, der in diesem Fall derart
ausgebildet ist, daß mindestens ein Arm der Plotterführung an einem zusätzlichen Laufwagen der Laufwagen-
Zeichenmaschine montiert ist, so daß die Positionierung
des Plotters keinerlei Schwierigkeiten bereitet und
überdies die Möglichkeit besteht, je nach den Gegebenheiten abwechselnd mit der erfindungsgemäß ausgestalteten Zeichenmaschine und mit dem Plotter zu arbeiten.

Weitere Einzelheiten und Vorteile der Erfindung werden nachstehend anhand von Zeichnungen noch näher erläutert und/oder sind Gegenstand von Unteransprüchen. Es zeigen:

Fig. 1 eine schematische perspektivische Darstellung einer ersten bevorzugten Ausführungsform eines Zeichengeräts gemäß der Erfindung und

Fig. 2 eine schematische perspektivische Darstellung eines in Ausgestaltung der Erfindung durch einen Plotter ergänzten Zeichengeräts gemäß Fig. 1.

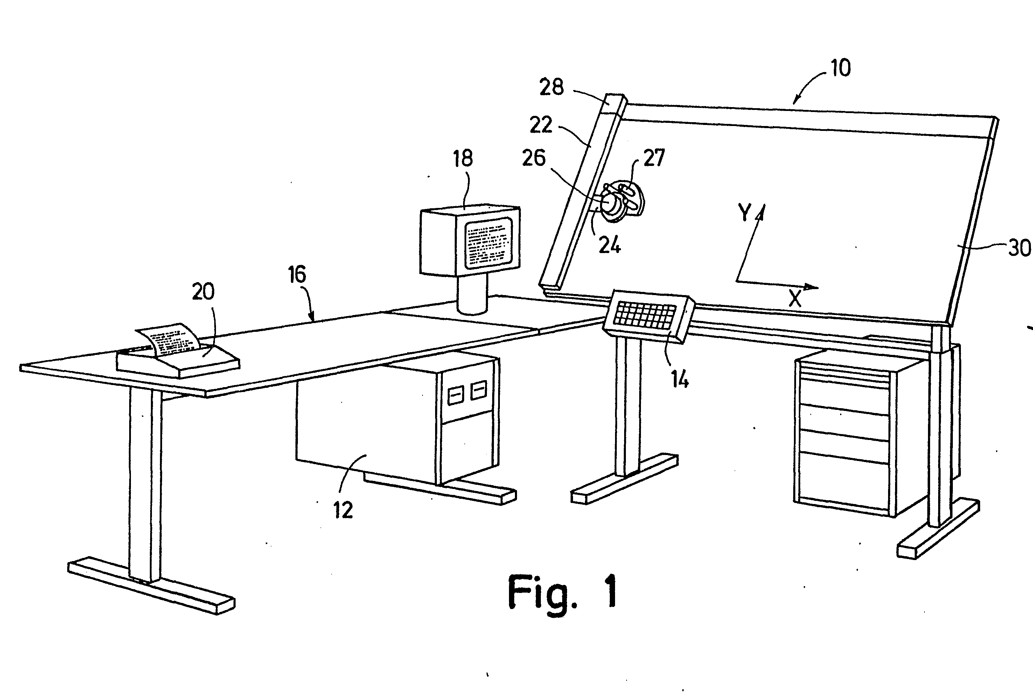

Im einzelnen zeigt Fig. 1 einen Arbeitsplatz mit einem Zeichengerät gemäß der Erfindung, wobei als Basiselemente des Zeichengeräts eine erfindungsgemäß modifizierte Laufwagen-Zeichenmaschine 10 und ein Rechner 12, beispielsweise ein Mikrocomputer mit Diskettenlaufwerken vorgesehen sind. Außerdem ist an der Zeichenmaschine eine in horizontaler Richtung bzw. in X-Richtung verfahrbare Tastatur 14 vorgesehen, die über entsprechende Leitungen (nicht dargestellt) mit der Zeichenmaschine 10 und mit dem Rechner 12 verbunden ist. Weiterhin ist im rechten Winkel zur Zeichenmaschine 10 noch ein Arbeitstisch 16 vorgesehen, auf dem sich mit dem Rechner 12 verbundene Peripherie-Geräte befinden, nämlich ein schwenkbarer Datenmonitor 18 und eine Drucker/Schreibmaschinen-Anordnung 20.

Rein äußerlich fällt an der Zeichenmaschine 10 zunächst
einmal auf, daß die in X-Richtung verfahrbare, in ihrer
äußersten linken Stellung gezeigte Führung 22 mit dem
Zeichenkopfträger 24 nicht mit den üblichen Zeichen-
Hilfseinrichtungen, d.h. mit einem drehbaren Zeichenkopf und daran befestigten Linealen versehen ist, sondern gemäß der Erfindung mit einem Schreib/Lesestift-
Träger 26, der im Prinzip als einfache Halterung für
einen Schreib- bzw. Zeichenstift sowie einen Lesestift
ausgebildet sein kann, der aber beim Ausführungsbeispiel
gemäß einer bevorzugten Ausführungsform der Erfindung
als Revolverkopf mit mehreren - in Fig. 1 drei - Stiften 27
ausgestaltet ist und nachstehend daher der Einfachheit
halber als Stiftrevolver 26 bezeichnet wird. Schließlich befindet sich am oberen Ende der Führung 22 noch
das Gehäuse 28, welches Bestandteil der X-Y-Führung
ist und die erforderliche Servoelektronik mit mindestens
einem Positioniermotor und Einrichtungen zur Wegmessung
enthält.

Bei dem in Fig. 1 gezeigten Arbeitsplatz besteht dann,
wenn man den Stiftrevolver 26 gegen einen normalen Zeichenkopf mit Linealen auswechselt, zunächst einmal die
Möglichkeit, "ganz normal" zu zeichnen, wobei es für
die Arbeit des Zeichners ohne besonderes Interesse ist,
daß die Laufwagen-Zeichenmaschine 10 des erfindungsgemäßen Zeichengeräts nicht mehr mit dem konventionellen
Gewichtsausgleich arbeitet, sondern stattdessen elektronische Gewichts- und Reibungsausgleichseinrichtungen
aufweist, und zwar im Gehäuse 28, die ebenfalls eine
leichte Beweglichkeit des Zeichenkopfes ermöglichen und auch bei aufgestelltem Zeichenbrett 30 - dies entspricht der in Fig. 1 gezeichneten Situation - dafür sorgen, daß der Zeichenkopf in der Lage bleibt, in die er von Hand bewegt wurde. Andererseits eröffnen der Rechner 12 und der Datenmonitor 18 auch bei diesem normalen Zeichenbetrieb die bei neueren Zeichenmaschinen bereits verwirklichte Möglichkeit der Anzeige der X-Koordinaten, der Y-Koordinaten und gegebenenfalls der Winkelstellung des Zeichenkopfs.

Wenn anstelle der normalen Zeicheneinrichtungen mit dem Zeichenkopfträger 24 der Stiftrevolver 26 verbunden ist, dann besteht jedoch erfindungsgemäß anders als bei den bisher üblichen Zeichengeräten auf der Basis von Laufwagen-Zeichenmaschinen die Möglichkeit, durch Verfahren des Stiftrevolvers 26 gegenüber dem Zeichenbrett 30 direkt mit dem jeweils in der Zeichenposition befindlichen Zeichenstift 27 zu zeichnen. Ferner kann nunmehr über die zwischen der Zeichenmaschine 10 und dem Rechner 12 bestehenden Leitungsverbindungen eine unmittelbare Speicherung der Koordinatendaten für die mit dem Zeichenstift 27 gezeichnete Linie erfolgen. Auf diese Weise werden zunächst einmal die Daten gesammelt, die später bei einer automatischen Steuerung des Zeichenstiftes 27 durch den Rechner 12 eine genaue Rekonstruktion einer früher erstellten Zeichnung gestatten, wobei gegebenenfalls erforderliche Ergänzungen und Korrekturen Berücksichtigung finden können. Bei diesem "freien Zeichnen" mit dem jeweils ausgewählten, vom Stiftrevolver 26 getragenen Zeichenstift 27 arbeitet der erfindungsgemäß vorgesehene elektronische Gewichtsausgleich so, daß die vom Zeichner eingeleiteten Bewegungen des Stiftrevolvers durch die Servoelektronik unterstützt werden, so daß sich der Stiftrevolver ebenso frei bewegen läßt wie der Zeichenkopf einer normalen Zeichenmaschine.

In weiterer Ausgestaltung der Erfindung besteht ferner die Möglichkeit, beim Zeichnen mit dem Zeichenstift 27 einer fest vorgegebenen Linie zu folgen. Bei dieser Arbeitsweise werden die Daten für die betreffende Linie, beispielsweise in Form der Koordinaten der Endpunkte einer geraden Linie oder in Form der Daten über Mittelpunkt und Radius eines zu zeichnenden Kreises, zuvor an der Tastatur 14 eingetastet, wobei die Möglichkeit besteht, über die Eingaben an der Tastatur 14 auch zugeordnete Unterprogramme aus dem Rechner 12 abzurufen. Aufgrund der damit vorgegebenen Daten werden die Einrichtungen der Servoelektronik dann so angesteuert, daß sich für das Verfahren des Stiftrevolvers 26 praktisch eine elektronische Kulissenführung ergibt, die das Zeichnen einer bestimmten, fest vorgegebenen Linie erzwingt.

Während des Verfahrens des Stiftrevolvers 26 längs der durch die elektronische Kulissenführung vorgegebenen Linie hat der Zeichner dann Gelegenheit, beim Erreichen bestimmter Punkte der Linie über die Tastatur 14 zusätzliche Daten in den Rechner 12 einzugeben, welche beispielsweise Hilfspunkte für die Vermaßung, Punkte für die Anbringung von Bezugszeichen, Punkte für die Ergänzung der Zeichnung mit vorgegebenen Teilfiguren,

Punkte für die Anbringung von Bearbeitungszeichen usw.
betreffen können.

Ein besonderer Vorteil des erfindungsgemäßen Zeichengeräts besteht ferner darin, daß dieses auch im "Kopierbetrieb" arbeiten kann. In diesem Fall wird auf das Zeichenbrett 30 eine vorbereitete Zeichnung aufgespannt, deren einzelne Linien dann mit einem vom Stiftrevolver getragenen Lesestift abgetastet werden, wobei dieser "Lesestift", der beispielsweise ein einfacher, nicht schreibender Stahlstift mit abgerundeter Spitze sein kann, an den interessierenden Zeichnungslinien entlanggeführt wird, um deren Koordinatendaten in den Speicherteil des Rechners 12 zu übernehmen, wobei Zitterbewegungen bzw. Ungenauigkeiten bei der Linienabtastung mit frei, von Hand geführtem Stiftrevolver 26 durch entsprechende elektronische Korrekturschaltungen des Rechners korrigiert werden können, wobei aber auch die Möglichkeit in Betracht zu ziehen ist, den Stiftrevolver mit den beispielsweise bei Stoffzuschneidemaschinen bekannten Abtasteinrichtungen auszustatten, so daß die Abtastung der Zeichnung mehr oder weniger vollautomatisch erfolgen kann.

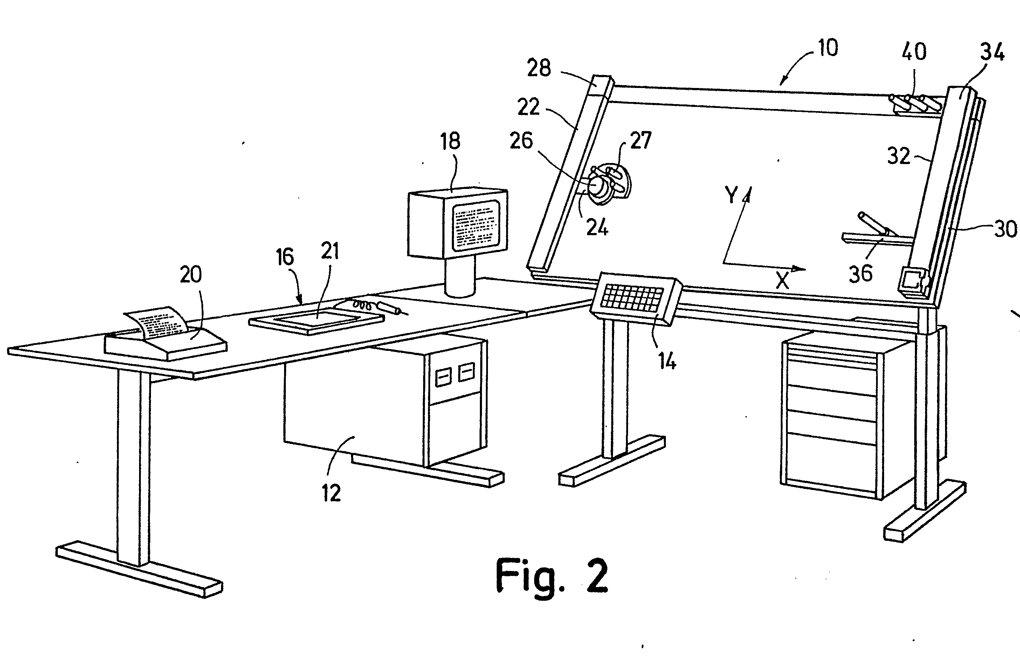

Der besondere Vorteil des erfindungsgemäßen Zeichengeräts,beim Erstellen einer Zeichnung Zusatzinformationen für vorgegebene Koordinatenpunkte eingeben zu können, kommt dann zum Tragen, wenn das Zeichengerät gemäß Fig. 1 durch einen Plotter ergänzt wird, wie dies in Fig. 2 gezeigt ist.

Im einzelnen zeigt Fig. 2 eine Zeichenmaschine 10, bei
der am rechten Rand des Zeichenbretts ein Plotter 32
vorgesehen ist, der mit einem zusätzlichen Laufwagen
der Zeichenmaschine 10 verbunden ist und dessen Führung
34 in X-Richtung des Zeichenbretts 30 verfahrbar ist.
Durch die Ergänzung des Zeichengeräts mit dem Plotter
32 ist es nunmehr möglich, nach der Erstellung einer
Zeichnung mit den Zeichenstiften 27 und nach der Eingabe der Zusatzdaten über die Tastatur 14 die endgültige Fertigstellung der Zeichnung mit Hilfe des Plotters 32 vorzunehmen, dessen Positionierung aufgrund
seiner Verbindung mit der Laufschiene des Zeichenbretts keinerlei Probleme mehr mit sich bringt und der
nun die Ergänzung der Zeichnung aufgrund der geringen
Trägheit seiner Schreibstifthalterung 36 die Zeichnung
mit der für Plotter typischen hohen Arbeitsgeschwindigkeit vornehmen kann, wobei in einem Schreibstiftmagazin
40 verschiedene Stifte für den Plotter bereitgehalten werden.
Zusätzliche Arbeitserleichterungen ergeben sich bei dem
Arbeitsplatz gemäß Fig. 2 ferner dadurch, daß speziell
für die Eingabe der Plotterdaten auch die Drucker/
Schreibmaschinen-Anordnung 20 zur Verfügung steht, an
der beispielsweise komplette Stücklisten zur Zeichnungsergänzung geschrieben werden können und eine entsprechende Ansteuerung des Plotters 32 ermöglichen. Außerdem steht bei dem Arbeitsplatz gemäß Fig. 2 als weitere
Daten-Eingabeeinheit auch noch ein sogenanntes Graphics-
Tablett 21 zur Verfügung.

Abschließend sei noch darauf hingewiesen, daß der
Schreib/Lesestift-Träger 26 für den "Kopierbetrieb" anstelle des Lesestiftes oder zusätzlich zu diesem
eine Messlupe bzw. ein Fadenkreuz aufweisen kann, welches die Verfolgung der abzutastenden Linien erleichtert und eine genauere Abtastung derselben ermöglicht.

Insgesamt ist der in Fig. 2 gezeigte Arbeitsplatz mit
einem Zeichengerät gemäß der Erfindung außerordentlich
vielseitig und ermöglicht folgende Anwendungen:

1. elektronische Anzeige der Koordinaten auf dem Bildschirm des Datenmonitors.

2. Das Arbeiten mit einem elektronischen Lineal (Abstände und Längen sind programmierbar).

3. Zusätzliche maßstabgetreue Anzeige bzw. Umrechnen
   in andere Maßeinheiten.

4. Überarbeiten vorhandener Zeichnungen (Maßstabänderung, Reinzeichnung).

5. Arbeiten mit dem Graphics-Tablett (Zeichnungen bzw.
   Symbole können bis zur vollen Größe der Arbeitsfläche erfasst, digitalisiert und gespeichert werden).

6. Kurvenanalyse.

Da die Bahnführung für den Schreib/Lesestift-Träger
26 je nach Rechnerprogramm auch komplizierte Formen
erlaubt, kann dieser manuell längs der freigegebenen
Linien, beispielsweise zum Zeichnen von Kreisbahnen,
Symbolen, Zeichen und mathematischen Funktionen verwendet werden. Damit entfällt die Notwendigkeit für
die Verwendung von Zirkeln, Schablonen, Kurvenlinealen
usw. Weiterhin können Kurven durch Anfahren der wichtigsten Punkte näherungsweise mit Hilfe des Rechners
berechnet und dann gezeichnet werden. Schließlich kann
das erfindungsgemäße Zeichengerät auch zum Zeichnen
gestrichelter bzw. strichpunktierter Linien eingesetzt
werden, wobei der Schreib/Lesestift-Träger zu diesem
Zweck mit einer steuerbaren Stiftaufsetzmechanik ausgerüstet wird, die über den Rechner ansteuerbar ist,
wodurch beispielsweise auch erreicht werden kann, daß
beim Zeichnen unterbrochene Linien nicht gerade Lücken
derselben auf die Kreuzungspunkte mit anderen Linien
fallen.

A 44 420 m
k - 176
27. März 1981

Anmelder: BZ Plankenhorn KG
Mühlgasse 22
7208 Spaichingen

P a t e n t a n s p r ü c h e.

1. Rechnergesteuertes Zeichengerät mit X-Y-Zeicheneinrichtungen, d a d u r c h   g e k e n n -
z e i c h n e t, daß es eine Laufwagen-Zeichenmaschine (10) mit einem mit dem Zeichenkopfträger
(24) derselben direkt verbundenen Schreib/Lesestift-Träger (26) aufweist, daß Positionserfassungseinrichtungen für das Erfassen der jeweiligen
X-Y-Koordinaten des Zeichenkopfträgers (24) vorgesehen sind, daß Speichereinrichtungen (Rechner 12)
vorgesehen sind, die mit den Positionserfassungseinrichtungen verbunden sind, und daß Steuereinrichtungen (Rechner 12, Tastatur 14) vorgesehen
sind, durch die von Hand herbeigeführte Bewegungen
des Schreib/Lesestift-Trägers (26) gegenüber der
Zeichenfläche (Zeichenbrett 30) in Form  der durchlaufenen X-Y-Koordinaten digital aufzeichenbar
sind und durch die der Schreib/Lesestift-Träger (26)
in Abhängigkeit von gespeicherten und/oder über eine
Tastatur (14) eingegebenen digitalen X-Y-Koordinatendaten zu Relativbewegungen gegenüber der Zeichenfläche (Zeichenbrett 30) freigebbar ist.

2. Zeichengerät nach Anspruch 1, dadurch gekennzeichnet, daß für den Schreib/Lesestift-Träger (26) zur Herbeiführung eines elektronischen Gewichtsausgleichs eine Servoelektronik mit Einrichtungen zur Wegmessung und mindestens einem Positioniermotor vorgesehen ist.

3. Zeichengerät nach Anspruch 1 oder 2, dadurch gekennzeichnet, daß die Servoelektronik derart steuerbar ist, daß sich für die Bewegungen des Schreib/Lesestift-Trägers (26) eine elektronische Kulissenführung ergibt.

4. Zeichengerät nach einem der Ansprüche 1 bis 3, dadurch gekennzeichnet, daß Programmiereinrichtungen (Tastatur 14) für die Vorgabe mindestens eines Ansetzpunktes für einen mit der Zeichenmaschine (10) zu einer Baueinheit zusammengefassten Plotter (32) vorgesehen sind.

0061754

Fig. 1

Firma BZ Plankenhorn KG , Mühlgasse 22 , 7208 Spaichingen

STELLRECHT & PARTNER

Fig. 2

0061754

Europäisches Patentamt

## EUROPÄISCHER RECHERCHENBERICHT

EP 82 10 2607

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | US-A-3 936 712 (GERBER et al.)<br>* Spalte 3, Zeile 6 bis Spalte 5, Zeile 66 * | 1 | B 43 L 13/02<br>G 06 K 15/22 |
| | --- | | |
| Y | US-A-3 693 066 (FRIEDMAN et al.)<br>* Spalte 2, Zeile 45 bis Spalte 3, Zeile 63 * | 1,2 | |
| | --- | | |
| Y | US-A-3 473 157 (LITTLE et al.)<br>* Spalte 4, Zeile 12 bis Spalte 8, Zeile 6 * | 1,2 | |
| | --- | | |
| A | VDI-ZEITSCHRIFT, Band 120, Nr.3, Februar 1978,<br>H. OPITZ et al.: "Systeme zur rechnerunterstützten Zeichnungserstellung", Seiten 90 bis 94 | | |
| | --- | | **RECHERCHIERTE SACHGEBIETE (Int. Cl. 3)** |
| A | US-A-3 601 590 (NORTON) | | B 43 L 13<br>G 01 D 9<br>G 06 K 15<br>G 06 F 3 |
| | --- | | |
| A | CH-A- 475 675 (HANDELSVERENIGING HAGEN) | | |
| | ----- | | |

Der vorliegende Recherchenbericht wurde für alle Patentansprüche erstellt.

| Recherchenort DEN HAAG | Abschlußdatum der Recherche 05-07-1982 | Prüfer LAMMINEUR P.C.G. |
|---|---|---|